# EUROPEAN PATENT APPLICATION

(11) **EP 4 753 027 A1**
(43) Date of publication of application: **03.06.2026**
(21) Application number: 25749016.9
(22) Date of filing: 24.01.2025
(51) Int. Cl.: H01M 10/6567, H01M 10/613, H01M 50/289, H01M 50/502, H01M 50/271, H01M 50/24, H01M 50/342, H01M 50/367

(54) **BATTERY PACK AND DEVICE INCLUDING SAME**

(30) Priority: 30.01.2024 KR 20240013809
(71) Applicant: LG Energy Solution, Ltd., Seoul 07335 (KR)
(72) Inventor: JUNG, Minyong, Daejeon 34122 (KR); CHOI, Bum, Daejeon 34122 (KR); CHOI, Seungbin, Daejeon 34122 (KR)
(74) Representative: Goddar, Heinz J.
(86) International application number: PCT/KR2025/001470
(87) International publication number: WO 2025/165113

(57) **Abstract**

A battery pack according to certain embodiments of the present disclosure comprises: a plurality of battery cells; a pack frame including a bottom frame and a side frame that form a storage space in which the battery cells are stored; a spacer that is located on an upper part of the bottom frame and on which the battery cells are seated; a holding frame that is located on an upper part of the spacer and formed with holes into which the battery cells are fitted; and a coolant that flows in a space between the spacer and the holding frame so as to directly cool the battery cells inside the pack frame.

## Description

### [TECHNICAL FIELD]

### Cross-Reference to Related Application(s)

This application claims priority to and the benefit of Korean Patent Application no. KR10-2024-0013809, filed on January 30, 2024, with the Korean Intellection Property Office, the content of which is incorporated herein by reference in its entirety.

The present disclosure relates to a battery pack and a device including the same, and more particularly, to an immersion cooling type battery pack, and a device including the same.

### [BACKGROUND ART]

As mobile devices have been increasingly developed, and the demand for such mobile devices has increased, the demand for secondary batteries as energy sources is also rapidly increasing. Accordingly, much research on secondary batteries satisfying various needs has been carried out.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, with a continuous rise of the necessity for a large-capacity secondary battery structure, including the utilization of the secondary battery as an energy storage source, there is a growing demand for a battery pack formed by assembling a plurality of secondary batteries.

Meanwhile, when a plurality of battery cells are connected in series/parallel to configure a battery pack, it is common to configure a battery pack by disposing a plurality of battery cells in a pack frame and adding other components.

Since such battery cells are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery pack including a large number of battery cells can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery cell can easily propagate to an adjacent battery cell, which may eventually lead to ignition or explosion of the battery pack itself. Therefore, in order to effectively cool a high-capacity battery pack, an immersion cooling type is used in which a coolant directly cools the battery cells inside the battery pack.

### [DETAILED DESCRIPTION OF THE INVENTION]

### [Technical Problem]

Therefore, it is an object of the present disclosure to provide a battery pack that can prevent leakage of a coolant while improving cooling performance through immersion cooling which directly cools battery cells by using a coolant, and a device including the same.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery pack comprising: a plurality of battery cells; a pack frame including a bottom frame and a side frame that form a storage space in which the battery cells are stored; a spacer that is located on an upper part of the bottom frame and on which the battery cells are seated; a holding frame that is located on an upper part of the spacer and formed with holes into which the battery cells are fitted; and a coolant that flows in a space between the spacer and the holding frame so as to directly cool the battery cells inside the pack frame.

A first waterproof adhesive may be applied to the upper part of the holding frame.

In a region higher than the holding frame, a busbar that guides electrical connection between the battery cells may be connected to the electrode terminals of the battery cells.

At least a part of the busbar may be surrounded by the first waterproof adhesive.

The battery pack may further comprise a pack upper cover that covers opened upper part of the pack frame. The first waterproof adhesive may be applied to a space between the holding frame and the pack upper cover.

A foam member may be provided on a lower surface of the pack upper cover.

A second waterproof adhesive may be applied to a surface that faces the battery cells among the spacer.

The battery pack may further comprise a pack lower cover that covers a lower part of the bottom frame. When viewed along the height direction, a bond line between the pack lower cover and the bottom frame may be formed along an outer circumference of the area where the battery cells are located.

The battery cells may have a vent part.

The vent part of the battery cell may face the spacer.

The spacer may comprise a spacer venting part which is a portion facing the vent part; and an outer peripheral part which wraps around the spacer venting part. The spacer venting part may have a thinner thickness than the outer peripheral part or has a notched groove.

The bottom frame may be formed with a venting channel that guides venting gas or particles discharged from the vent part of the battery cell.

The bottom frame may comprise a first frame and a second frame located below the first frame. The venting channel may be formed between the first frame and the second frame.

A through hole may be formed in the first frame. When viewed along the height direction, the through hole may be located so as to at least partially overlap the vent part of the battery cell.

A vertical beam that divides the battery cells into a plurality of battery cell groups may be located on the bottom frame.

The venting channel corresponding to one battery cell group may have an independent venting flow path that is not shared with the venting channel corresponding to other battery cell groups.

The venting channel may be communicated with the venting device provided in the side frame.

According to certain other aspects of the present disclosure, there is provided a device comprising the above-described battery pack.

### [Advantageous Effects]

According to certain embodiments of the present disclosure, in the immersion cooling that directly cools battery cells using a coolant, since a coolant flows in the area between the spacer on which the battery cells are seated and the holding frame formed with holes into which the battery cells are fitted, it is possible to prevent the coolant from leaking to the outside while increasing cooling performance.

In addition, when a thermal event occurs in the battery cell, the high-temperature venting gas, particles, or flames emitted from the battery cells are moved along a specific, preplanned path by the venting channel formed in the bottom frame, and discharged to the outside of the battery pack.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIGS. 1 and 2 are perspective views of a battery pack according to certain embodiments of the present disclosure.
FIG. 3 is a perspective view showing a pack frame included in the battery pack of FIGS. 1 and 2.
FIG. 4 is a perspective view showing a state where the battery cells, spacers, and holding frames according to certain embodiments of the present disclosure are assembled.
FIG. 5 is a perspective view showing battery cells and holding frames according to certain embodiments of the present disclosure.
FIG. 6 is an exploded perspective view of the battery cells and holding frames of FIG. 5.
FIGS. 7 (a) and (b) are respectively a perspective view and a side view of a battery cell according to certain embodiments of the present disclosure.
FIG. 8 is a cross-sectional view showing a cross section taken along the cutting line A-A in FIG. 7 (a).
FIG. 9 is a cross-sectional view of a battery cell according to certain embodiments of the present disclosure.
FIG. 10 is a cross-sectional perspective view of a battery pack according to certain embodiments of the present disclosure.
FIG. 11 is a partially enlarged cross-sectional view showing a section "B" of FIG. 10.
FIG. 12 is a partially enlarged cross-sectional view showing a section "C" of FIG. 11.
FIG. 13 is a partially enlarged cross-sectional view showing a section "D" of FIG. 11.
FIG. 14 is a perspective view showing the battery cells and spacers according to certain embodiments of the present disclosure.
FIG. 15 is a partially enlarged perspective view showing a spacer according to certain embodiments of the present disclosure.
FIG. 16 is a cross-sectional perspective view of a pack frame according to certain embodiments of the present disclosure.
FIG. 17 is a partially enlarged cross-sectional view showing a section "E" of FIG. 16.
FIG. 18 is a partially enlarged cross-sectional view showing a section "F" of FIG. 17.
FIG. 19 is a partial cross-sectional view of a battery pack according to certain other embodiment of the present disclosure.
FIG. 20 is a perspective view showing a state in which a first side frame is removed in a pack frame according to certain embodiments of the present disclosure.
FIG. 21 is an exploded perspective view of a bottom frame according to certain embodiments of the present disclosure.
FIG. 22 is a plan view showing battery cells and bond lines around them according to certain embodiment of the present disclosure.
FIG. 23 is a plan view showing the battery cells and pack lower covers according to certain embodiments of the present disclosure.
FIG. 24 is a partial perspective view showing a partial appearance of a bottom frame according to certain embodiments of the present disclosure.
FIG. 25 is a partial perspective view showing a state in which the first frame is removed from the bottom frame of FIG. 24.
FIG. 26 is a partial perspective view showing a state in which the separation frame is removed from the bottom frame of FIG. 25.
FIG. 27 is a plan view showing a partial appearance of the bottom frame according to certain embodiments of the present disclosure.
FIG. 28 is a plan view showing a state in which the first frame is removed from the bottom frame of FIG. 27.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

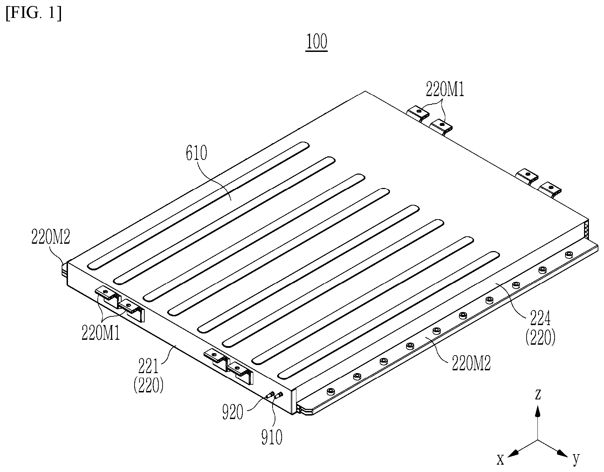

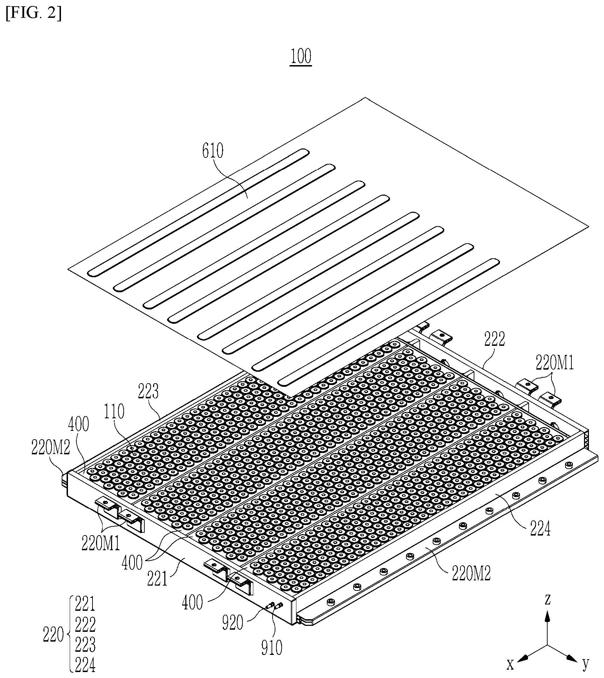

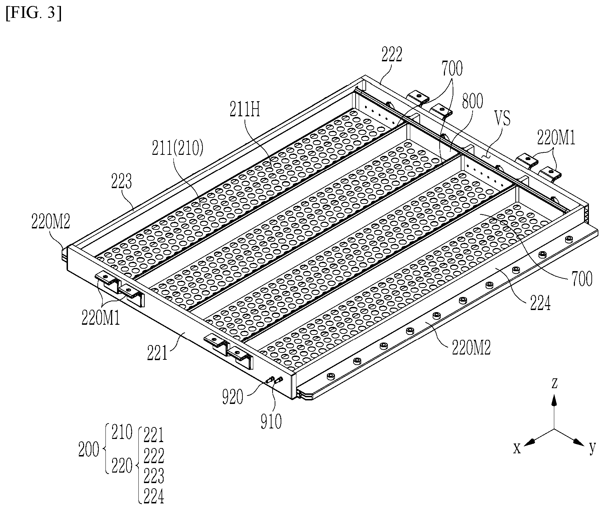

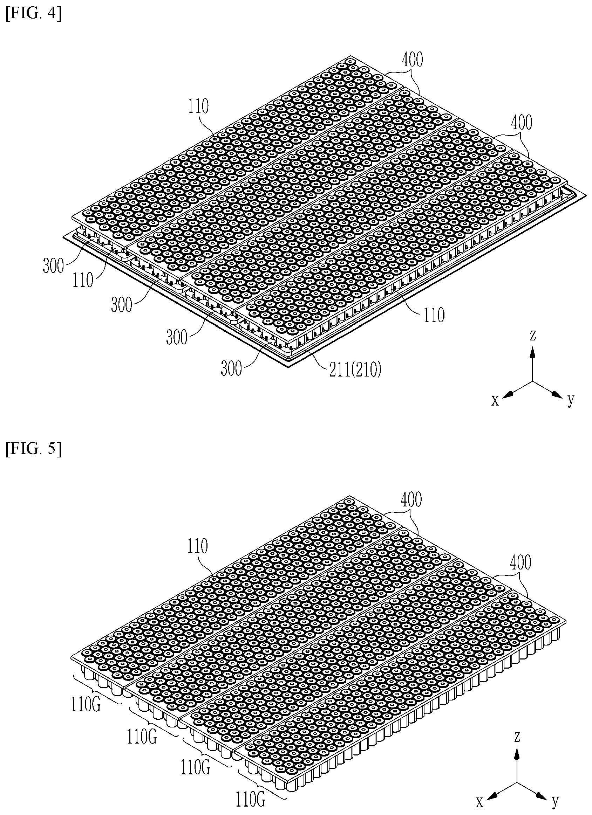

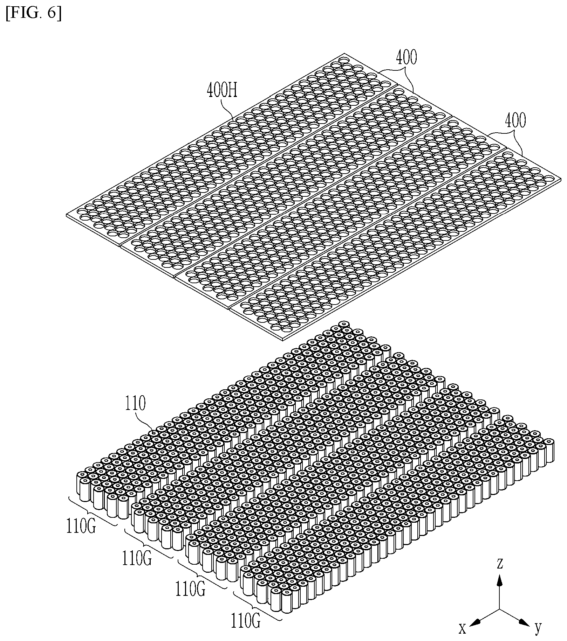

FIGS. 1 and 2 are perspective views of a battery pack according to certain embodiments of the present disclosure. FIG. 3 is a perspective view showing a pack frame included in the battery pack of FIGS. 1 and 2. FIG. 4 is a perspective view showing a state where the battery cells, spacers, and holding frames according to certain embodiments of the present disclosure are assembled. FIG. 5 is a perspective view showing battery cells and holding frames according to certain embodiments of the present disclosure. FIG. 6 is an exploded perspective view of the battery cells and holding frames of FIG. 5.

Referring to FIGS. 1 to 6 together, a battery pack 100 according to certain embodiments of the present disclosure includes: a plurality of battery cells 110; a pack frame 200 including a bottom frame 210 and a side frame 220 that form a storage space in which the battery cells 110 are stored; a spacer 300 that is located on an upper part of the bottom frame 210 and on which the battery cells 110 are seated; a holding frame 400 that is located on an upper part of the spacer 300 and formed with holes 400H into which the battery cells 110 are fitted; and a coolant that flows in a space between the spacer 300 and the holding frame 400 so as to directly cool the battery cells 110 inside the pack frame 200. That is, the battery pack 100 according to the present embodiments corresponds to an immersion cooling type battery pack 100 in which the coolant flows inside of the pack frame 200 and comes into contact with the battery cells 110 to directly cool the battery cells 110, rather than a conventional indirect cooling type in which a heat sink through which a coolant flows is provided in the battery pack.

In the battery pack 100 according to the present embodiments, the coolant flows in a space between the spacer 300 and the holding frame 400, and is prevented from flowing to other spaces. That is, the spacer 300 and the holding frame 400 may set the space in which the coolant flows, and can prevent the coolant from leaking to other spaces. The spacer 300 corresponds to the lower limit through which the coolant flow, and the holding frame 400 corresponds to the upper limit through which the coolant flows. In this way, by preventing leakage of a coolant, it is possible to improve the cooling performance together with the safety of the battery pack 100.

Next, the battery cell 110 according to the present embodiments will be described in detail first.

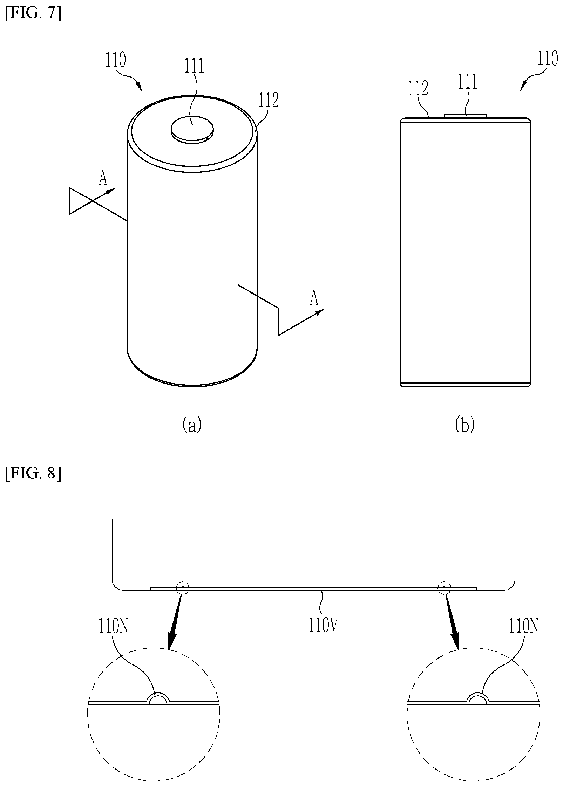

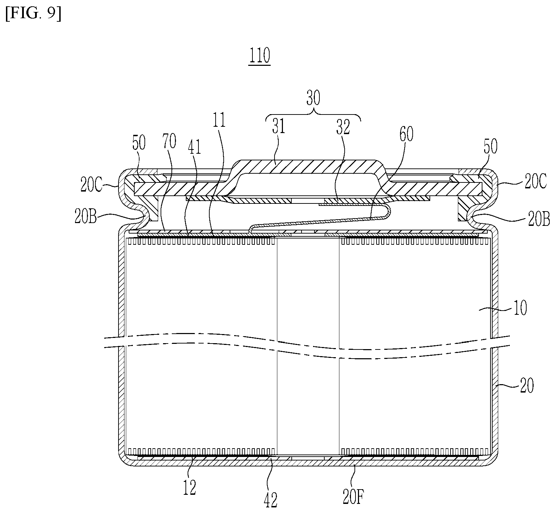

FIGS. 7 (a) and (b) are respectively a perspective view and a side view of a battery cell according to certain embodiments of the present disclosure. FIG. 8 is a cross-sectional view showing a cross section taken along the cutting line A-A' in FIG. 7 (a). FIG. 9 is a cross-sectional view of a battery cell according to certain other embodiments of the present disclosure.

Referring to FIGS. 7 to 9 together, the battery cell 110 according to the present embodiments may have a vent part 110V. The vent part 110V collectively refers to a member or mechanism provided in the battery cell 110 so as to be able to discharge venting gas or the like inside the battery cell 110.

In one embodiment, the battery cell 110 according to the present embodiments may be a cylindrical battery cell. Specifically, the battery cell 110 may include an electrode assembly 10; a battery can 20 that stores the electrode assembly 10 and has an opened upper part; and a cap assembly 30 that is coupled to the opened upper part of the battery can 20. A gasket 50 may be interposed between the battery can 20 and the cap assembly 30. An exemplary structure of the battery cell 110 will be described below, but the battery cell of the present disclosure is not limited to such a structure.

The battery can 20 according to the present embodiments may be a cylindrical case having an opened upper part, may store the electrode assembly 10 and an electrolytic solution (not shown) in an internal storage space, and may include a metal material such as aluminum (Al).

The cap assembly 30 according to the present embodiments may include a top cap 31 having a plate shape, and a connecting plate 32 electrically and mechanically coupled to the top cap 31. The top cap 31 may include a metal material having electrical conductivity, and may cover the opened upper part of the battery can 20. The top cap 31 may be electrically connected to the first segment 11 connected to the first electrode of the electrode assembly 10, and at the same time, may be electrically insulated from the battery can 20 by a gasket 50. Therefore, the cap assembly 30 according to the present embodiments including the top cap 31 may function as a first electrode terminal 111, which is an external terminal of the first electrode included in the electrode assembly 10.

Specifically, in the electrical connection between the top cap 31 and the first segment 11, the battery cell 110 according to the present embodiments may further comprise a first current collecting plate 41 located on the upper part of the electrode assembly 10. The first current collecting plate 41 may include a conductive metal material such as aluminum, copper, steel, nickel, etc., and may be electrically connected to the first segments 11 of the electrode assembly 10. The electrical connection may be performed through weld-bonding. A lead 60 may be connected to such a first current collecting plate 41. The lead 60 may extend in the upper direction of the electrode assembly 10 and be connected to the connecting plate 32. In certain other embodiments, the lead 60 may be directly coupled to the lower surface of the top cap 31. The coupling between the lead 60 and other components may be performed through welding. In addition, the first current collecting plate 41 may be formed integrally with the lead 60. In this case, the lead 60 may have a long plate shape extending outward from a vicinity of the central part of the first current collecting plate 41.

The first current collecting plate 41 may be provided with a plurality of projections and recesses (not shown) formed radially on its lower surface. In the case where the radial projections and recesses are provided, the first current collecting plate 41 may be pressed to press-fit the projections and recesses into the bent first segments 11. The coupling between the first current collecting plate 41 and the first segments 11 may be performed, for example, by laser welding. Laser welding may be performed by partially melting a base material of the first current collecting plate 41. In modified embodiments, welding between the first current collecting plate 41 and the first segments 11 may be performed in a state of interposing a solder. In this case, the solder may have a lower melting point compared to the first current collecting plate 41 and the first segments 11. Laser welding may be replaced by resistance welding, ultrasonic welding, spot welding, etc.

Meanwhile, the battery cell 110 according to the present embodiments may further comprise a second current collecting plate 42 located at a lower part of the electrode assembly 10. Specifically, the second current collecting plate 42 may be located between the electrode assembly 10 and the bottom part 20F of the battery can 20. The second current collecting plate 42 may include a conductive metal material such as aluminum, copper, steel, nickel, etc., and may be electrically connected to the second segments 12 of the electrode assembly 10. One surface of the second current collecting plate 42 may be coupled to the second segments 12, and the opposite surface of the second current collecting plate 42 may be coupled to the bottom part 20F of the battery can 20. Weld-bonding may be applied to the coupling of the second current collecting plate 42. Thereby, the battery can 20 according to the present embodiments can function as a second electrode terminal 112, which is an external terminal of the second electrode included in the electrode assembly 10.

Meanwhile, the secondary battery according to the present embodiments may include an insulating plate 70. The insulating plate 70 may cover the first current collecting plate 41. The insulating plate 70 covers the first current collecting plate 41 on the upper surface of the first current collecting plate 41, and thus can block the first current collecting plate 41 from coming into contact with the battery can 20, particularly the beading part 20B of the battery can 20 described below. The insulating plate 70 may also be provided with a separate lead hole so that a lead 60 extending upward from the first current collecting plate 41 can be pulled out. The lead 60 may be pulled out upward through the lead hole of the insulating plate 70 and coupled to the lower surface of the connecting plate 32 or the lower surface of the top cap 31.

The peripheral edge region of the insulating plate 70 can be interposed between the first current collecting plate 41 and the beading part 20B of the battery can 20, thereby fixing a coupling body between the electrode assembly 10 and the first current collecting plate 41. Therefore, the coupling body between the electrode assembly 10 and the first current collecting plate 41 can limit its movement in the axial direction of the electrode assembly 10, thereby improving the assembling stability of the secondary battery. The insulating plate 70 can be made of a polymer resin having insulating properties. In one embodiment, the insulating plate 70 can include one or more materials selected from the group consisting of polyethylene, polypropylene, polyimide, and polybutylene terephthalate.

Meanwhile, the battery can 20 according to the present embodiments may include a crimping part 20C and a beading part 20B. The crimping part 20C is a part of the battery can 20 that wraps around the cap assembly 30 and the gasket 50. Specifically, the battery can 20 and the cap assembly 30 may be crimp-bonded with the gasket 50 interposed between them. That is, the crimp-bonding may be applied to the coupling between the battery can 20 and the cap assembly 30. Thus, the crimping part 20C may be formed in the battery can 20. More specifically, the gasket 50 is located between the battery can 20 and the cap assembly 30, and then an upper end of the battery can 20 is bent in the direction where the cap assembly 30 is located, thereby achieving crimp-bonding.

The beading part 20B refers to a portion where a part of the battery can 20 is recessed toward the center in a region higher than the electrode assembly 10 among the side surface portions of the battery can 20, and is intended to stably arrange the cap assembly 30 and to prevent movement of the electrode assembly 10. That is, the cap assembly 30 according to the present embodiments and the gasket 50 surrounding it can be seated on the beading part 20B of the battery can 20. The above-described crimp bonding can be performed in a state where the cap assembly 30 and the gasket 50 surrounding it are seated on the beading part 20B.

The gasket 50 according to the present embodiments is located between the battery can 20 and the cap assembly 30, and thus can enhance the sealing performance of the secondary battery. The gasket 50 may also include an electrically insulating material, and may block a short circuit from occurring between the battery can 20 functioning as the second electrode terminal 112 and the cap assembly 30 functioning as the first electrode terminal 111. The gasket 50 may include at least one material selected from the group consisting of polypropylene (PP), polyethylene terephthalate (PET), polybutylene terephthalate (PBT), and perfluoroalkoxy alkane (PFA).

The vent part 110V according to the present embodiments may be formed on the lower surface of the battery cell 110. That is, it may be formed on the bottom part 20F (see FIG. 9) of the battery can 20.

When a thermal event or thermal runaway occurs inside a battery cell 110, high-temperature venting gas or particles may be generated. The vent part 110V collectively refers to a member or mechanism that can discharge such high-temperature venting gas or particles. In one embodiment, a notch part 110N, which is relatively thinner than a region adjacent to the bottom part of the battery, may be formed on the lower surface of the battery cell 110. The notch part 110N may have a constant peripheral edge. When the internal pressure of the battery cell 110 increases due to high-temperature venting gas generated inside any of the battery cells 110, the notch part 110N that is weak in rigidity due to its thin thickness may be ruptured first. Due to the rupture of the notch part 110N, the vent part 110V is opened, and high-temperature venting gas or particles, etc. can be discharged through the vent part 110V that is opened in this manner.

However, the structure of the vent part 110V is only one illustrative example, and the shape of the vent part 110V is not particularly limited as long as it is a member or mechanism that can discharge the internal venting gas in the event of a thermal event or thermal runaway.

Meanwhile, although not specifically shown in the figure, the battery cell according to the present disclosure may be a prismatic battery cell in which the electrode assembly is stored in a prismatic can. That is, although the battery cell according to the present embodiments is depicted in the figure as being a cylindrical battery cell, this is only one illustrative structure of the battery cell of the present disclosure, and the battery cell according to certain other embodiments of the present disclosure may be a prismatic battery cell.

Meanwhile, referring again to FIGS. 1 to 3, the pack frame 200 according to the present embodiments includes a bottom frame 210 and a side frame 220 that form a storage space in which battery cells 110 are stored, as described above. The battery cells 110 may be placed on the bottom frame 210, and a side frame 220 may be extended along the edge of the bottom frame 210. In one embodiment, the side frame 220 may include a first side frame 221, a second side frame 222, a third side frame 223, and a fourth side frame 224. The first side frame 221, the second side frame 222, the third side frame 223, and the fourth side frame 224 may be disposed along the four sides of the edge of the bottom frame 210 having a square shape. A storage space with an opened upper part is provided by the bottom frame 210 and the side frame 220, and the battery cells 110 can be disposed in such a storage space. After the battery cells 110 are disposed in the storage space, the opened upper part of the storage space can be covered by the pack upper cover 610. The pack upper cover 610 can be bonded to the side frame 220 of the pack frame 200, and in one embodiment, weld-bonding or boding using an adhesive can be applied. The battery cells 110 can be sealed by the pack frame 200 and the pack upper cover 610. Further, although not specifically shown in the figure, a gasket for improving sealing performance may be interposed between the pack upper cover 610 and the side frame 220.

Meanwhile, the battery pack 100 according to the present embodiments may include a mounting part 220M1 and a mounting beam 220M2 provided on a side frame 220 in order to fix the battery pack 100. In one embodiment, FIGS. 1 and 2 show a state in which the mounting parts 220M1 are formed on the first side frame 221 and the second side frame 222, and the mounting beams 220M2 are formed on the third side frame 223 and the fourth side frame 224. When mounting the battery pack 100 to a device, the mounting part 220M1 and the mounting beam 220M2 can be utilized. In one embodiment, when mounting the battery pack 100 to a vehicle device, the mounting part 220M1 and the mounting beam 220M2 can be fixed to the vehicle chassis.

Next, the battery pack structure for preventing leakage of a coolant in the immersion cooling type according to the present embodiments will be described in detail.

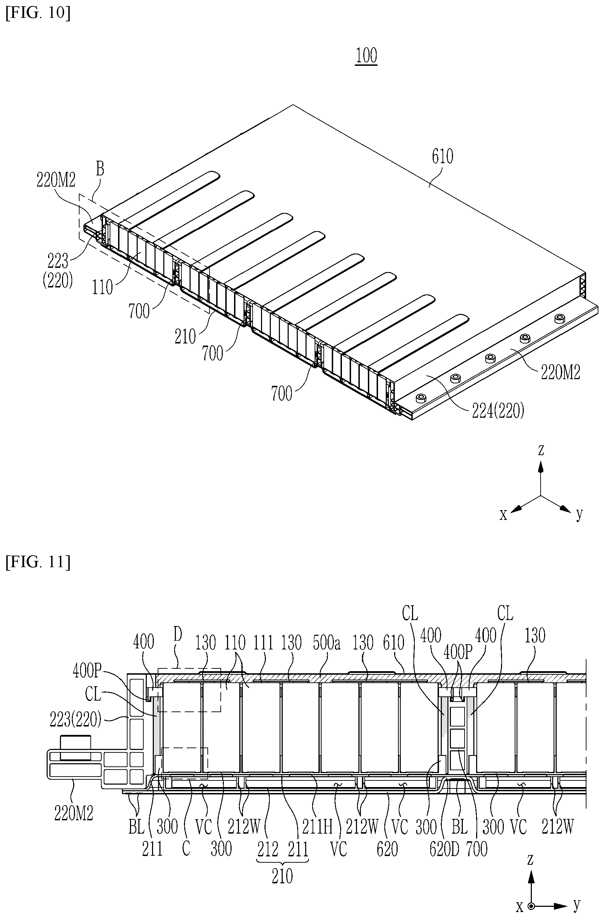

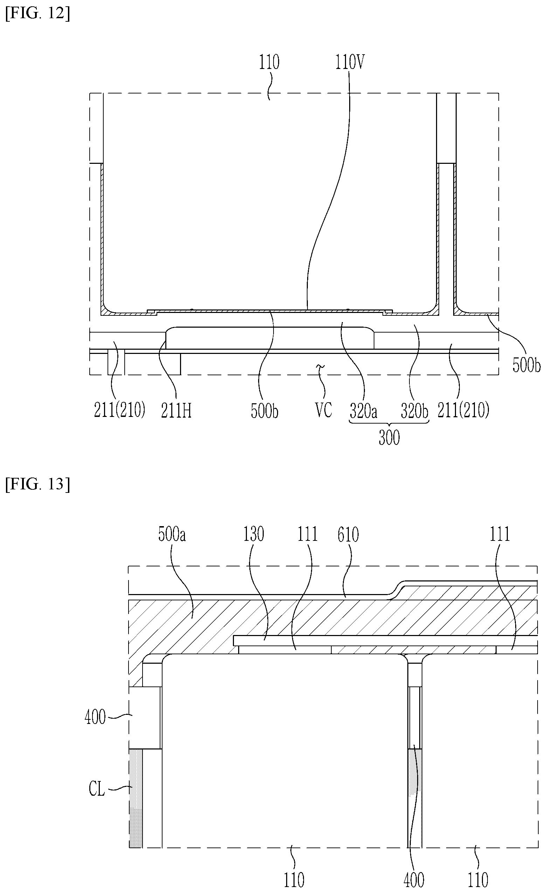

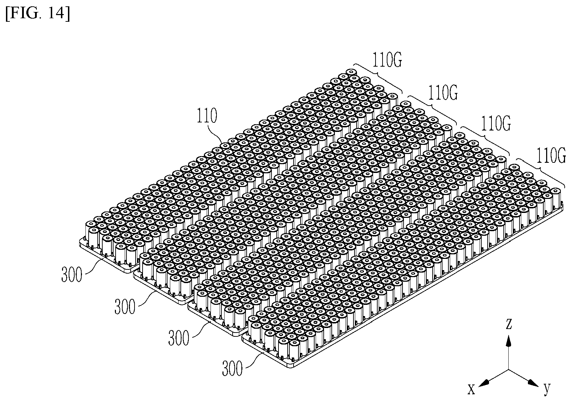

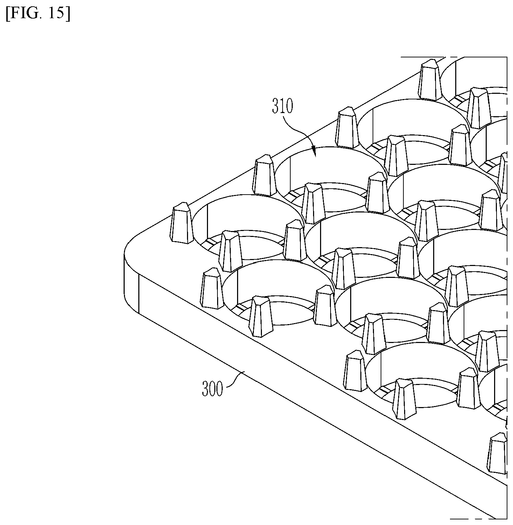

FIG. 10 is a cross-sectional perspective view of a battery pack according to certain embodiments of the present disclosure. FIG. 11 is a partially enlarged cross-sectional view showing a section "B" of FIG. 10. FIG. 12 is a partially enlarged cross-sectional view showing a section "C" of FIG. 11. FIG. 13 is a partially enlarged cross-sectional view showing a section "D" of FIG. 11. FIG. 14 is a perspective view showing the battery cells and spacers according to certain embodiments of the present disclosure. FIG. 15 is a partially enlarged perspective view showing a spacer according to certain embodiments of the present disclosure.

Referring to FIGS. 2 to 6, and FIGS. 10 to 15 together, the battery pack 100 according to the present embodiments includes: a spacer 300 that is located on the upper part of the bottom frame 210 and on which battery cells 110 are seated, a holding frame 400 that is located on the upper part of the spacer 300 and formed with holes 400H into which battery cells 110 are fitted, and a coolant CL that flows in a space between the spacer 300 and the holding frame 400 so as to directly cool the battery cells 110 inside the pack frame 200, as described above. As shown in FIG. 11, the coolant CL flowing in the space between the spacer 300 and the holding frame 400 can directly cool the battery cells 110 while coming into contact with the battery cells 110.

The side frame 220 may be formed with an inlet port 910 and an outlet port 920. In one example, the state in which the inlet port 910 and the outlet port 920 are formed in the first side frame 221 is shown in FIGS. 2 and 3. The coolant CL flowing in through the inlet port 910 can cool the battery cells 110 while flowing along the space between the spacer 300 and the holding frame 400, and then be discharged through the outlet port 920. The inlet port 910 and the outlet port 920 are connected to a coolant circulation system (not shown) outside the battery pack 100, so that the coolant CL can be continuously circulated.

The holding frame 400 can be located between the spacer 300 and the pack upper cover 610. The holding frame 400 is formed with holes 400H, so that the battery cells 110 can be fitted into the holes 400H. For this purpose, the hole 400H of the holding frame 400 can have a shape corresponding to the outer shape of the battery cells 110. If the battery cell 110 is a cylindrical battery, the hole 400H of the holding frame 400 may be circular, and if the battery cell 110 is a prismatic battery, the hole 400H of the holding frame 400 may be square.

The holding frame 400 may also include protrusions 400P. As shown in FIG. 11, the protrusions 400P of the holding frame 400 may be hook-coupled to the side frame 220 or the vertical beam 700 described below. Due to the hook-coupling of the protrusions 400P, the holding frame 400 may be mounted on the side frame 220 or the vertical beam 700 while being spaced apart from the spacer 300 by a certain distance. The holding frame 400 is spaced apart from the spacer 300 by a certain distance to thereby ensure a space through which the coolant CL flows.

The spacer 300 can be placed on the bottom frame 210. The spacer 300 may be formed with a seating part 310 on which the battery cells 110 can be seated. The battery cell 110 is not located directly on the bottom frame 210, but can be placed on the bottom frame 210 under the state where the battery cell 110 is seated on the seating part 310 of the spacer 300. For this purpose, the seating part 310 of the spacer 300 can have a shape corresponding to the outer shape of the battery cells 110. If the battery cell 110 is a cylindrical battery, the seating part 310 of the spacer 300 may be circular, and if the battery cell 110 is a prismatic battery, the seating part 310 of the spacer 300 may be square. The battery cells 110 are located in the seating part 310 of the spacer 300, so that the battery cells 110 can be stably disposed and fixed in the space inside the pack frame 200.

As described above, the spacer 300 and the holding frame 400 may set a space in which the coolant CL flows, and can prevent the coolant CL from leaking into other spaces. The spacer 300 corresponds to the lower limit in which the coolant flows, and the holding frame 400 corresponds to the upper limit in which the coolant flows. By preventing leakage of a coolant in this way, the safety of the battery pack 100 and the cooling performance can be improved.

Specifically, in a region higher than the holding frame 400, the busbar 130 that guides the electrical connection of the battery cells 110 can be connected to the electrode terminals 111 and 112 of the battery cells 110. As described above, the cap assembly 30 and the battery can 20 of the battery cell 110 can function as the first electrode terminal 111 and the second electrode terminal 112 of the battery cell 110. The busbar 130 is connected to the first electrode terminal 111 or the second electrode terminal 112, thereby being able to perform the HV connection, which is the electrical connection of the battery cells 110. The HV connection is a connection that serves as a power source to supply power that requires high voltage, and refers to an electrical connection between battery cells or an electrical connection between a battery pack and a device. That is, the electrical connection between battery cells 110 can be made in the upper region of the holding frame 400. In other words, the space where the coolant CL flows and the space of the HV connection where an electrical connection between battery cells 110 are made can be separated from each other by the holding frame 400. As will be described later, the coolant CL may be an insulating oil or cooling water. When the coolant CL, which is cooling water, comes into contact with the HV connection portion, a short circuit may occur, which may cause serious safety problems. Furthermore, even if the coolant CL is an insulating oil, when the coolant CL comes into contact with the part where the electrical connection between battery cells 110 is made, it may have a negative effect on the electrical connection between battery cells 110. Thus, in the present embodiments, by separating the space where the coolant CL flows to the holding frame 400 and the space where the electrical connection between the battery cells 110 is made, it is possible to minimize the effect of the coolant CL on the electrical connection of the battery cells 110, while maintaining the effect of increasing the cooling performance through direct cooling of the coolant CL.

In the battery pack 100 according to the present embodiments, a first waterproof adhesive 500a can be applied to the upper part of the holding frame 400. Due to the first waterproof adhesive 500a applied to the upper part of the holding frame 400, the coolant CL can be prevented from passing the holding frame 400 and leaking to the upper region of the holding frame 400. In a state in which the battery cell 110 is mounted to the hole 400H of the holding frame 400, a first waterproof adhesive 500a can be applied to the upper surface of the holding frame 400 and the upper region of the battery cell 110.

As described previously, the battery pack 100 may include a pack upper cover 610 that covers the opened upper part of the pack frame 200, wherein a first waterproof adhesive 500a may be applied to a space between the holding frame 400 and the pack upper cover 610. In particular, at least some of the busbar 130 may be surrounded by the first waterproof adhesive 500a. Further, the peripheral space of the busbar 130 may be filled with the first waterproof adhesive 500a. Moreover, the space between the holding frame 400 and the pack upper cover 610 may be filled with the first waterproof adhesive 500a. Due to the holding frame 400 and the first waterproof adhesive 500a, it is possible to prevent the coolant CL from leaking into the upper region of the holding frame 400.

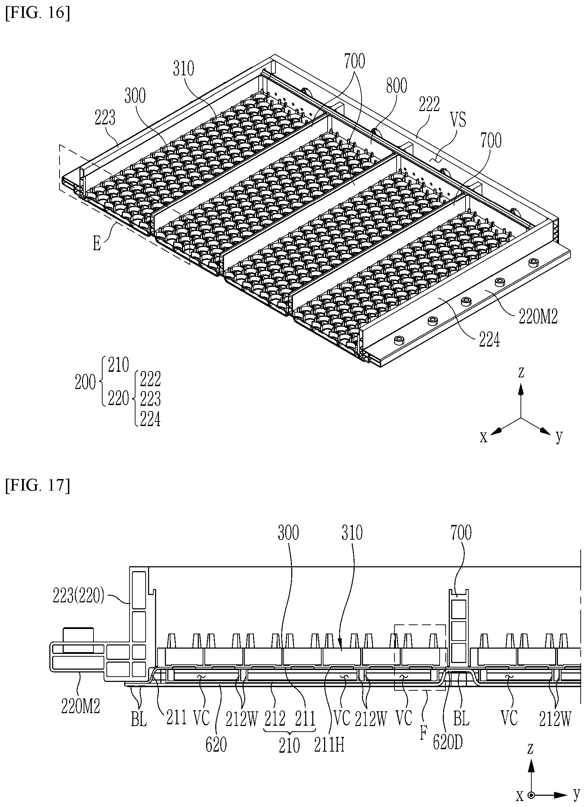

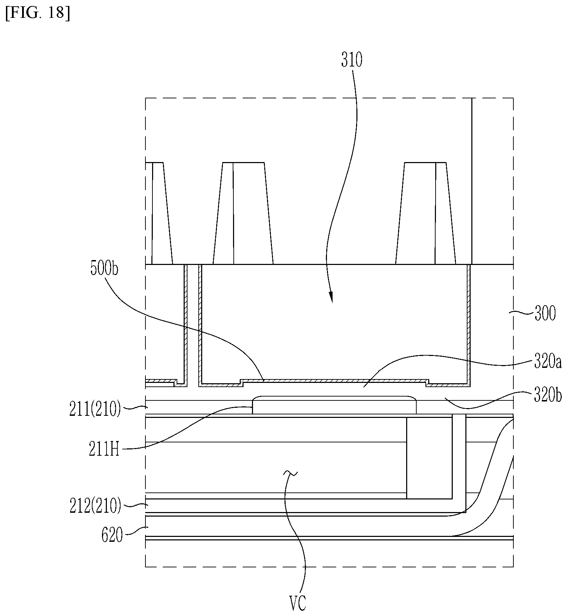

FIG. 16 is a cross-sectional perspective view of a pack frame according to certain embodiments of the present disclosure. FIG. 17 is a partially enlarged cross-sectional view showing a section "E" of FIG. 16. FIG. 18 is a partially enlarged cross-sectional view showing a section "F" of FIG. 17.

Referring to FIGS. 11, 12 and 14 to 18 together, in the battery pack 100 according to the present embodiments, a second waterproof adhesive 500b may be applied to a surface that faces the battery cells 110 among the spacer 300. Specifically, the second waterproof adhesive 500b may be applied on the seating part 310 of the spacer 300. Due to the spacer 300 and the second waterproof adhesive 500b, the coolant CL may be prevented from passing the spacer 300 and leaking to the lower region of the spacer 300.

The first waterproof adhesive 500a and the second waterproof adhesive 500b according to the present embodiments are not particularly limited in respect of the material as long as they exhibit waterproof performance and have impact resistance, adhesiveness, electrical insulation properties, and the like. In one embodiment, the first waterproof adhesive 500a and the second waterproof adhesive 500b may include a 2-liquid type epoxy-based material in which a curing agent is mixed into a main agent.

Meanwhile, the coolant CL according to the present embodiments may be a fluid. In the battery pack 100, the coolant CL comes into direct contact with the battery cells 110, so that the coolant CL may be electrically insulating. The coolant CL may be a material having insulating properties. In one embodiment, the coolant CL may be an insulating oil. However, in the case of the battery pack 100 according to the present embodiments, since the coolant CL is prevented from leaking to a region other than the space between the spacer 300 and the holding frame 400, a general cooling water may also be applied as the coolant CL.

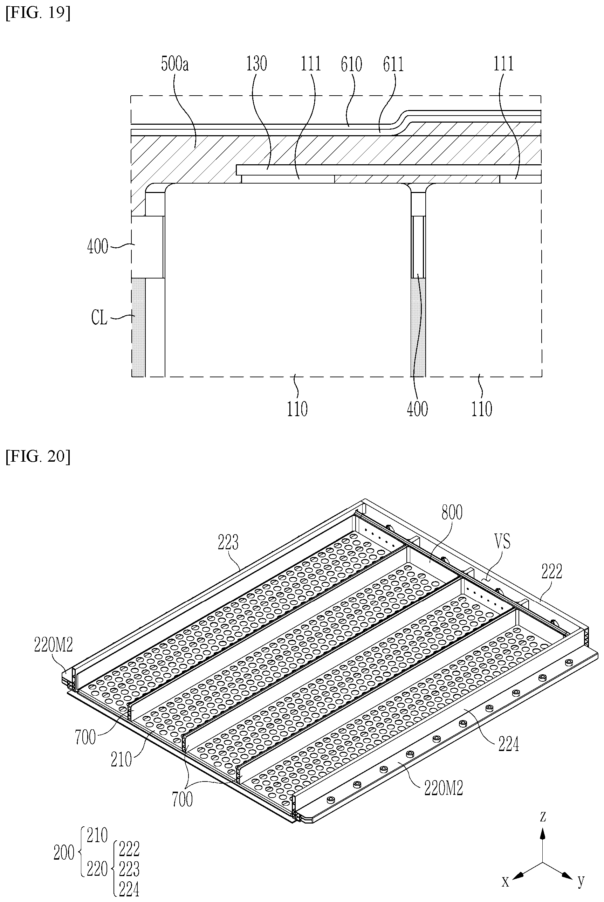

FIG. 19 is a partial cross-sectional view of a battery pack according to certain other embodiment of the present disclosure.

Referring to FIG. 19, as described previously, a first waterproof adhesive 500a may be applied to a space between the holding frame 400 and the pack upper cover 610. In a battery pack 100 according to certain other embodiments of the present disclosure, a foam member 611 may be provided on a lower surface of the pack upper cover 610. The foam member 611 may be a member in the form of expanded foam, and may be attached to the lower surface of the pack upper cover 610. The space between the holding frame 400 and the foam member 611 may be filled with a first waterproof adhesive 500a.

High-temperature venting gas, particles or the like inside the battery cell 110 may be discharged from the vent part 110V of the battery cell 110, and such high-temperature venting gas, particles or the like may be discharged to the outside of the battery pack 100 through the venting channel VC of the bottom frame 210 described below. At this time, in order to prevent the venting gas or particles from being discharged in the direction of the pack upper cover 610 rather than in the direction where the venting channel VC of the bottom frame 210 is located, a foam member 611 may be attached to the lower surface of the pack upper cover 610. That is, the foam member 611 may be a member for top potting.

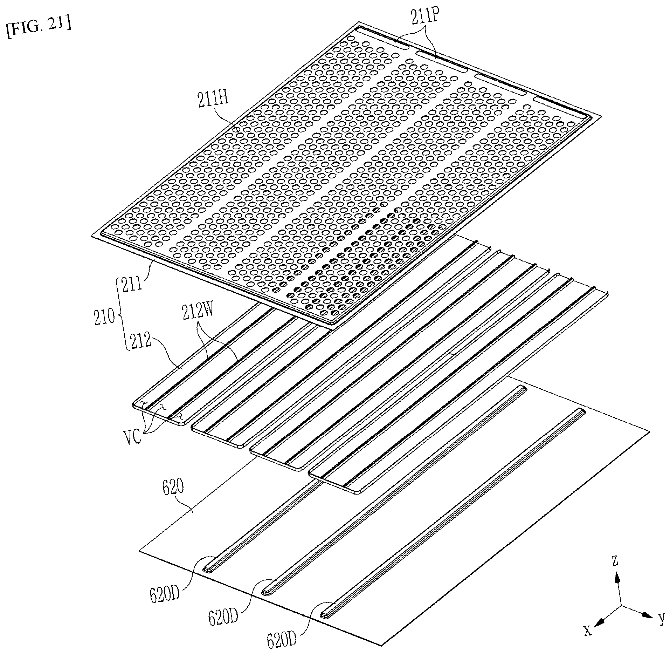

FIG. 20 is a perspective view showing a state in which a first side frame is removed in a pack frame according to certain embodiments of the present disclosure. FIG. 21 is an exploded perspective view of a bottom frame according to certain embodiments of the present disclosure.

Referring to FIGS. 20 and 21 together with FIGS. 3, 5, 6, 12, 16, 17, 18, etc., the pack frame 200 includes a bottom frame 210 and a side frame 220 as described above. A venting channel VC may be formed in the bottom frame 210 according to certain embodiments of the present disclosure. Specifically, the bottom frame 210 may include a first frame 211 and a second frame 212 located below the first frame 211, and a venting channel VC may be formed between the first frame 211 and the second frame 212. The detailed structures of the bottom frame 210 and the venting channel VC will be described later.

In the battery pack 100 according to the present embodiments, a vertical beam 700 that divides the battery cells 110 into a plurality of battery cell groups 110G may be located on the bottom frame 210. The vertical beam 700 may be located upright on the bottom frame 210 so that one surface of the vertical beam 700 is perpendicular to one surface of the bottom frame 210. In one embodiment, FIGS. 2 to 6 shows that three vertical beams 700 are located at certain intervals on the bottom frame 210. Thereby, the battery cells 110 may be divided into four battery cell groups 110G.

Meanwhile, the battery pack 100 according to the present embodiments may include a separation frame 800 located adjacent to the side frame 220. In one embodiment, the separation frame 800 may be located adjacent to the second side frame 222. The separation frame 800 may be located between the second side frame 222 and the battery cells 110, and may be placed on the bottom frame 210. A venting space VS, which is a space in which venting gas discharged from the battery cells 110 is discharged, may be formed between the separation frame 800 and the second side frame 222. The separation frame 800 and the venting space VS will be described later.

The side frame 220, the vertical beam 700 and the separation frame 800 according to the present embodiments may be a metal frame having an empty space therein. Specifically, the side frame 220, the vertical beam 700 and the separation frame 800 may be metal frames in the form of a square pipe having a cavity. Thereby, the weight of the battery pack 100 can be reduced, and at the same time, the rigidity of the battery pack 100 can be secured. In addition, since the bottom frame 210, the side frame 220, the vertical beam 700 and the separation frame 800 include metal materials, the weld bonding can be used for the connection between the frames. The weld bonding method is not particularly limited, however, MIG welding (Metal Inert Gas Welding) or FSW (Friction Stir Welding) can be applied by way of example.

Meanwhile, the battery pack 100 according to the present embodiments may further include a pack lower cover 620 that covers the lower part of the bottom frame 210. The pack lower cover 620 may be a plate-shaped member including a metal material.

Next, the bond line between the pack lower cover 620 and the bottom frame 210 will be described.

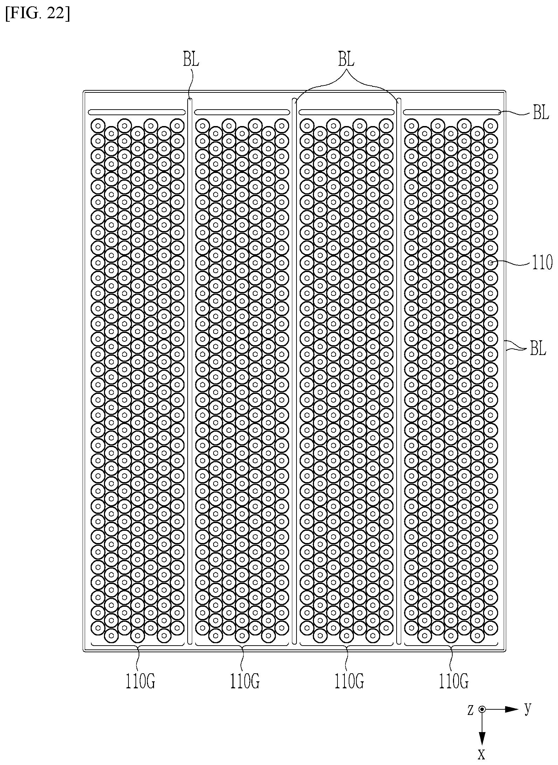

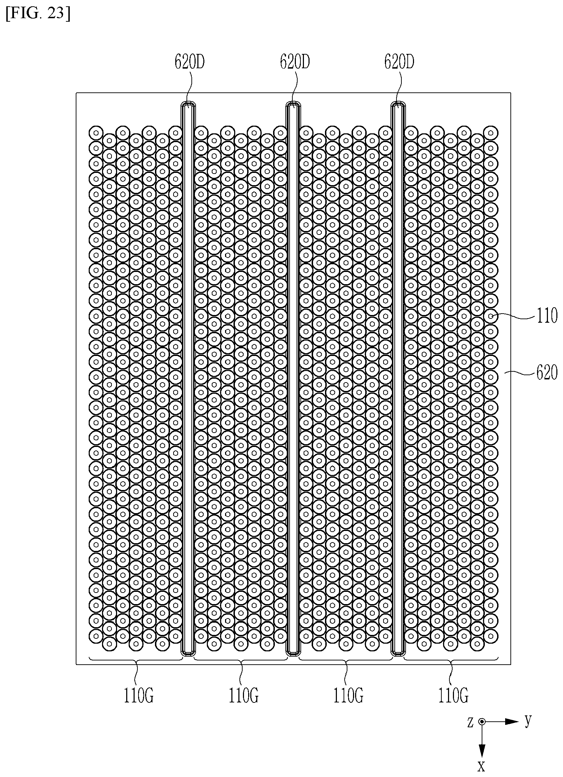

FIG. 22 is a plan view showing battery cells and bond lines around them according to certain embodiment of the present disclosure. FIG. 23 is a plan view showing the battery cells and pack lower covers according to certain embodiments of the present disclosure.

Referring to FIGS. 11, 17, 20 to 23 together, when viewed along the height direction, a bond line BL between the pack lower cover 620 and the bottom frame 210 may be formed along the outer circumference of the area where the battery cells 110 are located. Here, viewing along the height direction means viewing along a direction perpendicular to one surface of the bottom frame 210 on one surface of the bottom frame 210. More specifically, viewing along the height direction may correspond to viewing along the -z-axis direction on the xy plane, as shown in FIGS. 22 and 23.

The bond line BL between the pack lower cover 620 and the bottom frame 210 may be the portion where weld-bonding is performed. In particular, the portion where the pack lower cover 620 and the bottom frame 210 are welded may be the portion where the side frame 220, the vertical beam 700, and the separation frame 800 are placed. In other words, the side frame 220, the bottom frame 210, and the pack lower cover 620 may be bonded together through welding. Further, the vertical beam 700, the bottom frame 210, and the pack lower cover 620 may be bonded together through welding. Further, the separation frame 800, the bottom frame 210, and the pack lower cover 620 may be bonded together through welding. In FIG. 22, the bond line BL surrounding the outer circumference of the battery cells 110 may be a portion where the side frame 220, the bottom frame 210, and the pack lower cover 620 are bonded together. Further, the bond line BL located between the battery cell groups 110G in FIG. 22 may be a portion where the vertical beam 700, the bottom frame 210, and the pack lower cover 620 are bonded together. Further, the bond line BL located directly above each battery cell group 110G in FIG. 22 may be a portion where the separation frame 800, the bottom frame 210, and the pack lower cover 620 are bonded together.

Meanwhile, the pack lower cover 620 according to the present embodiments may include a recessed part 620D that is recessed upwardly. This recessed part 620D may be a portion that is recessed upwardly to be bonded with the vertical beam 700. While the recessed part 620D of the pack lower cover 620 is being bonded with the bottom frame 210 and the vertical beam 700, a bond line BL may be formed at the corresponding portion.

The bond line BL between the pack lower cover 620 and the bottom frame 210 formed along the outer circumference of the area where the battery cells 110 are located, as mentioned above, may be a portion where the side frame 220 is bonded together. This bond line BL may not only fix a space between the side frame 220, the bottom frame 210, and the pack lower cover 620, but also may perform a leak prevention function that prevents the coolant CL from leaking to the outside of the battery pack 100. Specifically, for the lower direction of the battery cell 110, the spacer 300 and the second waterproof adhesive 500b described above may perform a primary function of preventing leakage of the coolant. The bond line BL formed along the outer circumference of the area where the battery cells 110 are located may perform a secondary function of preventing leakage of the coolant for the lower direction of the battery cell 110. That is, even if the coolant CL penetrates and leaks out through the spacer 300 and the second waterproof adhesive 500b, the coolant CL is sealed by the bond line BL and does not leak to the outside. Similarly, the bond line BL located between the battery cell groups 110G or the bond line BL located directly above the battery cell group 110G can also perform the function of preventing the coolant CL from leaking to the outside.

Meanwhile, the weld-bonding between the pack lower cover 620 and the bottom frame 210 can be performed only in one direction on one surface of the pack lower cover 620. This is because a side frame 220, a vertical beam 700, or a separation frame 800 are placed on the opposite side. In this way, when welding is performed only in one direction on one surface of the pack lower cover 620, it is preferable to apply the FSW (Friction Stir Welding) method.

Next, the directional venting structure of the battery pack 100 according to the present embodiments will be described.

Referring again to FIGS. 8, 12, 14, 15, and 18, the vent part 110V of the battery cell 110 according to the present embodiments may face the spacer 300. More specifically, the vent part 110V of the battery cell 110 may face the seating part 310 of the spacer 300. The spacer 300 according to the present embodiments may include a spacer venting part 320a which is a part facing the vent part 110V; and an outer peripheral part 320b that wraps around the spacer venting part 320a. The spacer venting part 320a may have a thickness smaller than the outer peripheral part 320b or may have a notched groove. Due to a thermal event or thermal runaway of the battery cell 110, high-temperature venting gas and particles are discharged from the vent part 110V of the battery cell 110, and due to the pressure of the venting gas, the spacer venting part 320a may be separated from the outer peripheral part 320b and the spacer venting part 320a may be opened. That is, the high-temperature venting gas and particles may be discharged downward through the vent part 110V and the opened spacer venting part 320a. Subsequently, the high-temperature venting gas and particles may move along a preset path through the venting channel VC provided in the bottom frame 210. The specific structure of the bottom frame 210 and the venting channel VC will be described below.

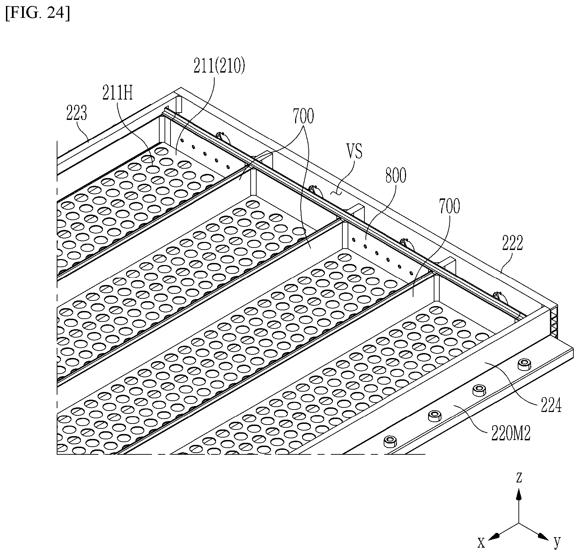

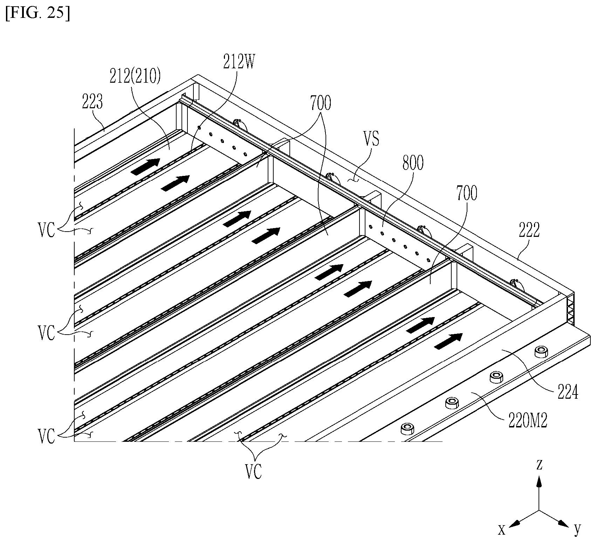

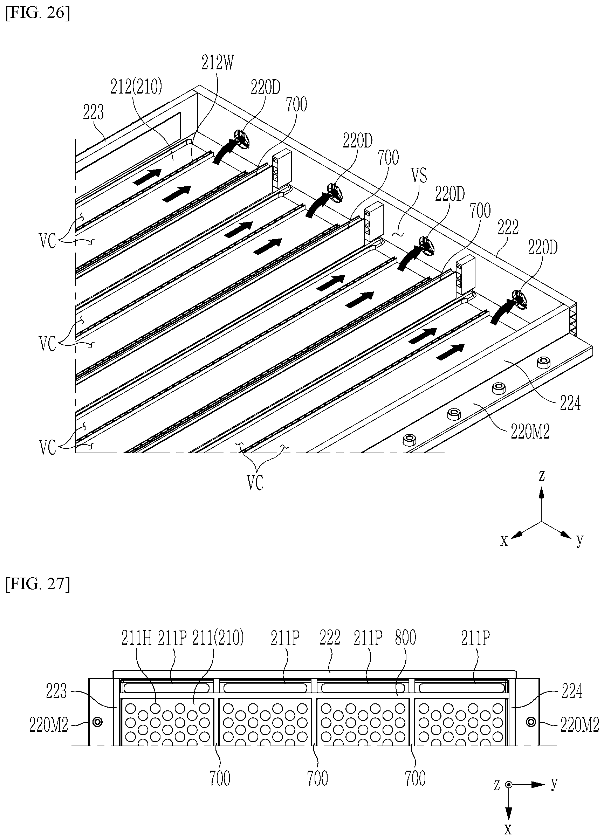

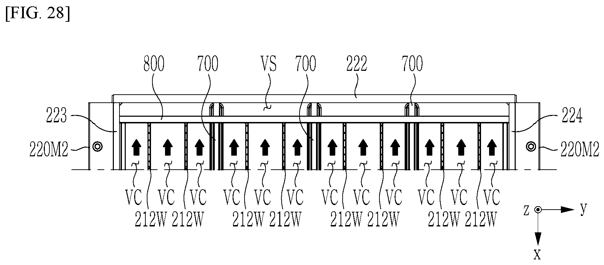

FIG. 24 is a partial perspective view showing a partial appearance of a bottom frame according to certain embodiments of the present disclosure. FIG. 25 is a partial perspective view showing a state in which the first frame is removed from the bottom frame of FIG. 24. FIG. 26 is a partial perspective view showing a state in which the separation frame is removed from the bottom frame of FIG. 25. FIG. 27 is a plan view showing a partial appearance of the bottom frame according to certain embodiments of the present disclosure. FIG. 28 is a plan view showing a state in which the first frame is removed from the bottom frame of FIG. 27.

Referring to FIGS. 24 to 28 together with FIGS. 11, 12, 17, 18 and 21, the bottom frame 210 according to certain embodiments of the present disclosure may be formed with a venting channel VC that guides the high-temperature venting gas and particles discharged from the vent part 110V of the battery cell 110. Specifically, the bottom frame 210 may include a first frame 211 and a second frame 212 located below the first frame 211, and a venting channel VC may be formed between the first frame 211 and the second frame 212.

The first frame 211 may be formed with through holes 211H. When viewed along the height direction, the through holes 211H may be located so as to at least partially overlap with the vent part 110V of the battery cell 110. The through holes 211H may be provided so as to correspond one-to-one with the vent part 110V. Similarly, the through holes 211H may be provided so as to correspond one-to-one with the spacer venting parts 320a.

High-temperature venting gas and particles passing through the vent part 110V and the opened spacer venting part 320a may flow into the venting channel VC inside the bottom frame 210 through the through holes 211H. The high-temperature venting gas and particles flowing into the venting channel VC are discharged to the outside of the battery pack 100. The battery pack 100 according to the present embodiments has a so-called "bottom vent" structure that discharges high-temperature venting gas and particles to the outside using the bottom frame 210. The above-described HV connection is a connection that serves as a power source to supply power that requires high voltage, and means a connection between battery cells, etc. If high-temperature venting gas or particles, etc. due to a thermal event of the battery cell 110 come into contact with a high-voltage path such as an HV connection, a short circuit or arc discharge may occur, which may lead to additional explosion and flame generation. On the other hand, the battery pack 100 according to the present embodiments has a "bottom vent" structure as described above, so that high-temperature venting gas or particles due to a thermal event are discharged downward, i.e., to the bottom frame 210. Therefore, there is no risk of high-temperature venting gas or particles coming into contact with a high-voltage path such as an HV connection, and ultimately, safety against thermal runaway phenomenon can be enhanced.

Furthermore, in the case of the present embodiments, since the holding frame 400 further covers the region where the electrode terminals 111 and 112 of the battery cells 110 and the busbar 130 are located, it is possible to completely block high-temperature venting gas or particles from reaching the region where the electrode terminals 111 and 112 of the battery cells 110 and the busbar 130 are located.

Further, since the battery pack 100 according to the present embodiments has a "bottom vent" structure, the influence affecting to high-temperature venting gas or particles on the coolant CL flowing in a space between the spacer 300 and the holding frame 400 can be minimized.

Further, the spacer 300 and the second waterproof adhesive 500b can prevent the coolant CL from leaking into the lower region of the spacer 300, as well as prevent the high-temperature venting gas or particles from leaking out in the upper direction rather than the lower direction where the bottom frame 210 is located.

Meanwhile, as described above, the vertical beam 700 can divide the battery cells 110 into a plurality of battery cell groups 110G. A venting channel VC corresponding to one battery cell group 110G can have an independent venting flow path that is not shared with the venting channel VC corresponding to the other battery cell group 110G. In one embodiment, as shown in FIGS. 14 and 21, four second frames 212 corresponding to each of the four battery cell groups 110G can be provided. A venting channel VC in one second frame 212 can have an independent venting path that is not communicated with the venting channel VC in the other second frame 212.

In addition, the second frame 212 may have at least one partition wall 212W, and may be divided into a plurality of venting channels VC within the second frame 212 due to the partition wall 212W.

In this way, some venting channels VC may not share a space with each other and may have independent venting paths. Thus, high-temperature venting gas and particles passing through one venting channel VC do not propagate to other venting channels VC. Thereby, the propagation of a thermal event occurring in a specific battery cell 110 to other battery cells 110 can be minimized. Therefore, high-temperature venting gas or particles do not flow back into other battery cells 110 communicating with other venting channels VC, and ultimately, thermal events are not propagated or triggered to other battery cells 110. In the present embodiments, by realizing unique venting paths between venting channels VC, thermal runaway transfer between battery cells 110 is minimized, and explosion and structural collapse of the battery pack can be prevented.

Meanwhile, the venting channel VC according to the present embodiments may be communicated with the venting device 220D provided in the side frame 220. The high-temperature venting gas and particles flowing along the venting channel VC may be discharged to the outside of the battery pack 100 through the venting device 220D. The specific form of the venting device 220D is not particularly limited, and the venting device 220D may be a valve structure that opens or ruptures when the internal pressure is equal to or higher than a certain level. FIG. 26 shows four venting devices 220D formed in the second side frame 222.

Next, an exemplary structure of a venting path from a venting channel VC to a venting device 220D will be described.

As described above, the battery pack 100 according to the present embodiments may include a separation frame 800 located adjacent to the side frame 220. The separation frame 800 may be located upright on the bottom frame 210 so that one surface of the separation frame 800 is perpendicular to one surface of the bottom frame 210. One surface of the separation frame 800 may be perpendicular to one surface of the vertical beam 700. The separation frame 800 may be located between the second side frame 222 and the battery cells 110, and a venting space VS may be formed between the separation frame 800 and the second side frame 222. This venting space VS may be communicated with a venting device 220D.

As shown in FIGS. 21 and 27, the first frame 211 of the bottom frame 210 may be formed with not only a through hole 211H but also an opening 211P. Such an opening 211P can communicate with a venting space VS. When viewed along the height direction, the through hole 211H and the opening 211P may be located on opposite sides with respect to the separation frame 800. In other words, the area where the through hole 211H is formed and the area where the opening 211P is formed may be separated from each other by the separation frame 800.

Referring to FIGS. 24 and 25, high-temperature venting gas or particles discharged from the vent part of the battery cell may flow into the venting channel VC provided between the first frame 211 and the second frame 212 through the through hole 211H of the first frame 211. The high-temperature venting gas or particles flow along the direction in which the venting channel VC extends.

Referring to FIGS. 25 to 28, high-temperature venting gas or particles flowing along the venting channel VC may flow into the venting space VS through the opening 211P of the first frame 211. Even within such a venting space VS, the space may be divided by battery cell group 110G and may not be shared with each other. Finally, the high-temperature venting gas or particles flowing into the venting space VS may be discharged to the outside of the battery pack 100 through the venting device 220D.

In the present embodiments, a venting path that flows long along the venting channel VC is provided, and a venting space VS may be provided separately in addition to the venting channel VC. The high-temperature venting gas and particles move along the long venting path, and the venting path is bent by the venting space VS. While the venting gas flows along the venting channel VC and the venting space VS, the temperature of the venting gas or particles can be lowered. Therefore, the venting gas or particles can be prevented from triggering an explosion. Further, as the venting path becomes longer, oxygen flowing in from the outside of the battery pack 100 can be blocked from encountering the venting gas, etc., thereby preventing the occurrence of an explosion. In addition, large particles can be filtered out in the corresponding venting path.

In the embodiments above, expressions indicating directions such as "front," "rear," "left," "right," "up," and "down" have been used. These expressions are used only to facilitate the description, and may vary, for example, depending on the location of a target object or an observer.

The battery pack according to certain embodiments of the present disclosure described above can be applied to various devices, which include, for example, transportation vehicles such as electric bicycles, electric vehicles, and hybrids, and energy storage systems (ESS). However, without being limited thereto, the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery pack
110: battery cell
110V: vent part
200: pack frame
210: bottom frame
220: side frame
300: spacer
400: holding frame
500a: first waterproof adhesive
500b: second waterproof adhesive
610: pack upper cover
620: pack lower cover

## Claims

1. A battery pack comprising:
a plurality of battery cells;
a pack frame including a bottom frame and a side frame that form a storage space in which the battery cells are stored;
a spacer that is located on an upper part of the bottom frame and on which the battery cells are seated;
a holding frame that is located on an upper part of the spacer and formed with holes into which the battery cells are fitted; and
a coolant that flows in a space between the spacer and the holding frame so as to directly cool the battery cells inside the pack frame.

2. The battery pack according to claim 1,
wherein a first waterproof adhesive is applied to the upper part of the holding frame.

3. The battery pack according to claim 1,
wherein in a region higher than the holding frame, a busbar that guides electrical connection between the battery cells is connected to the electrode terminals of the battery cells.

4. The battery pack according to claim 3,
wherein at least a part of the busbar is surrounded by the first waterproof adhesive.

5. The battery pack according to claim 1,
further comprising a pack upper cover that covers opened upper part of the pack frame,
wherein the first waterproof adhesive is applied to a space between the holding frame and the pack upper cover.

6. The battery pack according to claim 5,
wherein a foam member is provided on a lower surface of the pack upper cover.

7. The battery pack according to claim 1,
wherein a second waterproof adhesive is applied to a surface that faces the battery cells among the spacer.

8. The battery pack according to claim 1,
further comprising a pack lower cover that covers a lower part of the bottom frame,
wherein when viewed along the height direction, a bond line between the pack lower cover and the bottom frame is formed along an outer circumference of the area where the battery cells are located.

9. The battery pack according to claim 1,
wherein the battery cells have a vent part.

10. The battery pack according to claim 9,
wherein the vent part of the battery cell faces the spacer.

11. The battery pack according to claim 10,
wherein the spacer comprises a spacer venting part which is a portion facing the vent part; and an outer peripheral part which wraps around the spacer venting part,
the spacer venting part has a thinner thickness than the outer peripheral part or has a notched groove.

12. The battery pack according to claim 9,
wherein the bottom frame is formed with a venting channel that guides venting gas or particles discharged from the vent part of the battery cell.

13. The battery pack according to claim 12,
wherein the bottom frame comprises a first frame and a second frame located below the first frame, and
the venting channel is formed between the first frame and the second frame.

14. The battery pack according to claim 13,
wherein a through hole is formed in the first frame, and
when viewed along the height direction, the through hole is located so as to at least partially overlap the vent part of the battery cell.

15. The battery pack according to claim 12,
wherein a vertical beam that divides the battery cells into a plurality of battery cell groups is located on the bottom frame.

16. The battery pack according to claim 15,
wherein the venting channel corresponding to one battery cell group has an independent venting flow path that is not shared with the venting channel corresponding to other battery cell groups.

17. The battery pack according to claim 12,
wherein the venting channel is communicated with the venting device provided in the side frame.

18. A device comprising a battery pack according to claim 1.
